# EUROPÄISCHE PATENTSCHRIFT

(11) **EP 3 810 447 B1**
(45) Veröffentlichungstag und Bekanntmachung des Hinweises auf die Patenterteilung: **16.11.2022**
(21) Anmeldenummer: 19731143.4
(22) Anmeldetag: 04.06.2019
(51) Int. Cl.: B60K 6/40, B60K 6/405, B60K 6/442, B60K 6/387, F16H 63/34

(54) **ANTRIEBSEINHEIT, ANTRIEBSANORDNUNG UND HYBRID-KRAFTFAHRZEUG**
DRIVE UNIT, DRIVE ASSEMBLY AND HYBRID MOTOR VEHICLE
UNITÉ D'ENTRAÎNEMENT, SYSTÈME D'ENTRAÎNEMENT ET VÉHICULE AUTOMOBILE HYBRIDE

(30) Priorität: 20.06.2018 DE 102018114787
(43) Veröffentlichungstag der Anmeldung: 28.04.2021
(73) Patentinhaber: Schaeffler Technologies AG & Co. KG, 91074 Herzogenaurach (DE)
(72) Erfinder: TRINKENSCHUH, Andreas, 77815 Bühl (DE); LEHMANN, Steffen, 76275 Ettlingen (DE); GREB, Peter, 77833 Ottersweier (DE); MAN, Laszlo, 77833 Ottersweier (DE)
(86) Internationale Anmeldenummer: PCT/DE2019/100492
(87) Internationale Veröffentlichungsnummer: WO 2019/242802

(56) Entgegenhaltungen:
- WO-A1-2010/095610
- WO-A1-2015/075859
- DE-A1-102017 127 695
- DE-B4-112006 001 432
- JP-A- 2013 121 788

## Beschreibung

Die Erfindung betrifft eine Antriebseinheit für einen Antriebsstrang eines elektrisch antreibbaren Kraftfahrzeugs, insbesondere eines Hybridkraftfahrzeugs, sowie eine Antriebsanordnung mit einer erfindungsgemäßen Antriebseinheit und ein Hybrid-Kraftfahrzeug mit einer erfindungsgemäßen Antriebsanordnung.

Aus dem Stand der Technik sind Antriebseinrichtungen für ein Hybridfahrzeug bekannt, welche unter anderem eine Verbrennungskraftmaschine, eine erste elektrische Maschine sowie eine zweite elektrische Maschine umfassen.

Die DE 10 2015 222 690 A1, DE 10 2015 222 691 A1 sowie WO 2017 084 887 A1 beschreiben dazu Verfahren zum Steuern einer derartigen Antriebseinrichtung, wobei die Antriebseinrichtung in mehreren Betriebsmodi betreibbar ist.

In der DE 10 2015 222 690 A1 wird vorwiegend ein serieller Hybridbetrieb erläutert, in dem das Fahrantriebsdrehmoment mittels der zweiten Elektromaschine bewirkt wird und die Verbrennungskraftmaschine die erste Elektromaschine zur Erzeugung von elektrischer Energie antreibt. Beschrieben ist, wie die Verbrennungskraftmaschine in einem Arbeitspunkt betrieben wird, wobei ein kombinierter Wirkungsgrad der Antriebseinrichtung von dem Wirkungsgrad der Verbrennungskraftmaschine und von dem Wirkungsgrad der ersten Elektromaschine abhängt.

In den Dokumenten DE 10 2015 222 691 A1 und WO 2017 084 887 A1 werden ein leistungsorientierter sowie ein verbrauchsorientierter Modus beschrieben, wobei ein jeweiliger Modus von einer Bedingung abhängig ist. Diese Bedingung umfasst, dass ein Sollantriebswert auf einen Zwischenwert erhöht wird, der zwischen einer Verbrennungskraftmaschine-Schwelle, die einen maximalen Antriebswert in einem parallelen Hybridbetrieb repräsentiert, in dem ausschließlich die Verbrennungskraftmaschine ein Fahrantriebsdrehmoment bewirkt, und einer Parallelhybridbetrieb-Schwelle, die einen maximalen Antriebswert in dem parallelen Boost-Hybridbetrieb repräsentiert, liegt.

Die DE 10 2015 222 692 A1, WO 2017 084 888 A1, DE 10 2015 222 694 A1 sowie WO 2017 084 889 A1 beschreiben ein Verfahren zum Betreiben einer Antriebseinrichtung eines Hybridfahrzeugs zum Antreiben eines Antriebsrads, wobei die Antriebseinrichtung eine Verbrennungskraftmaschine, eine mit der Verbrennungskraftmaschine gekoppelte erste Elektromaschine, eine zweite Elektromaschine, einen elektrischen Akkumulator und eine Hauptkupplung zwischen der Verbrennungskraftmaschine und dem Antriebsrad umfasst.

In der DE 10 2015 222 692 A1 sowie der WO 2017 084 888 A1 wird beschrieben, dass die Antriebseinrichtung in einem von drei Betriebsmodi betrieben wird, nämlich in einem rein elektrischen Betrieb, einem seriellen Hybridbetrieb oder einem parallelen Hybridbetrieb, wobei das während des Wechsels von dem ersten Betriebsmodus in den zweiten Betriebsmodus bereitgestellte Fahrantriebsdrehmoment einem geeignet wählbaren Verlauf zwischen dem vor und nach dem Wechsel bereitgestellten Fahrantriebsdrehmoment entspricht.

DE 10 2015 222 694 A1 und WO 2017 084 889 A1 offenbaren, dass zwischen der Verbrennungskraftmaschine und dem Antriebsrad weiterhin ein Getriebe angeordnet ist.

Des Weiteren beschreibt ein jeweiliges genanntes Dokument ein Hybridfahrzeug, welches eine Hybrid-Antriebseinrichtung aufweist.

Das im Stand der Technik wiederholt beschriebene Hybridfahrzeug umfasst eine Verbrennungskraftmaschine, eine erste sowie zweite elektrische Maschine, zumindest ein Antriebsrad, eine Hauptkupplung sowie eine erste und eine zweite Kupplung. Die Hauptkupplung ist dabei zwischen der Verbrennungskraftmaschine und einem Antriebsrad angeordnet, die erste Kupplung ist zwischen der ersten elektrischen Maschine und einer Ausgangswelle der Verbrennungskraftmaschine vorgesehen und die zweite Kupplung ist zwischen der zweiten elektrischen Maschine und einem Antriebsrad vorgesehen.

Aus der (noch nicht veröffentlichten) DE 10 2017 128 289.0 ist eine Antriebseinheit für einen Antriebsstrang eines Hybridkraftfahrzeuges bekannt, mit einer Verbrennungskraftmaschine, einer ersten elektrischen Maschine, einer zweiten elektrischen Maschine, einer ersten Übersetzungsstufe und einer Triebwelle der ersten elektrischen Maschine und/oder der zweiten elektrischen Maschine. Des Weiteren umfasst die Antriebseinheit eine Getriebeteileinheit, über die die Triebwelle der jeweiligen elektrischen Maschine mit Radantriebswellen gekoppelt oder koppelbar ist. Eine zweite Übersetzungsstufe ist mit einer Vorgelegeeinheit gekoppelt, wobei die Vorgelegeeinheit eine integrierte Kupplung aufweist und so mit den Radantriebswellen weiter verbunden ist, dass in Abhängigkeit der Stellung dieser Kupplung die Verbrennungskraftmaschine über die zweite Übersetzungsstufe mit den Radantriebswellen koppelbar ist.

Die ebenfalls noch nicht veröffentlichte DE 10 2017 127 695.5 lehrt einen Antriebsstrang für ein Hybridkraftfahrzeug, welcher eine Getriebeeingangswelle aufweist, die über einen ersten Teilantriebsstrang mit einer ersten elektrischen Maschine und einer Verbrennungskraftmaschine zur Drehmomentübertragung in Wirkbeziehung steht und die über einen zweiten Teilantriebsstrang mit einer zweiten elektrischen Maschine zur Drehmomentübertragung in Wirkbeziehung steht. Die zweite elektrische Maschine ist dauerhaft mit der Getriebeeingangswelle drehmomentübertragend verbunden und die erste elektrische Maschine und die Verbrennungskraftmaschine sind koppelbar zur Drehmomentübertragung mit der Getriebeeingangswelle verbindbar. Dabei kann die erste elektrische Maschine und/oder die zweite elektrische Maschine gekühlt ausgeführt sein. Besonders ist es bevorzugt, wenn die Kühlung mittels einer Wasserkühlung aus einem Fahrzeug-Kühlkreis oder mittels einer Ölkühlung mit Getriebeöl aus dem Getriebe heraus ausgebildet ist. Weiterhin kann auch die eingesetzte Trennkupplung als eine ölgekühlte Lamellenkupplung ausgebildet sein.

Weiterer Stand der Technik ist aus der JP 2013 121788 A bekannt.

Hiervon ausgehend liegt der vorliegenden Erfindung die Aufgabe zugrunde, eine Antriebseinheit sowie eine damit ausgestattete Antriebsanordnung und ein damit ausgerüstetes Hybrid-Kraftfahrzeug zur Verfügung zu stellen, die mit effizient genutztem Bauraum einen Betrieb mit hohem Wirkungsgrad gewährleisten.

Die Aufgabe wird durch die erfindungsgemäße Antriebseinheit nach Anspruch 1 gelöst. Vorteilhafte Ausgestaltungen der Antriebseinheit sind in den Unteransprüchen 2 bis 5 angegeben. Ergänzend wird eine Antriebsanordnung für ein Kraftfahrzeug, welches die Antriebseinheit aufweist, gemäß Anspruch 6 zur Verfügung gestellt, sowie ein Hybrid-Kraftfahrzeug mit der erfindungsgemäßen Antriebsanordnung gemäß Anspruch 7 zur Verfügung gestellt.

Die Erfindung betrifft eine Antriebseinheit für einen Antriebsstrang eines elektrisch antreibbaren Kraftfahrzeugs, insbesondere eines Hybridkraftfahrzeuges, mit einer ersten elektrischen Maschine sowie einer zweiten elektrischen Maschine und einer ersten Welle sowie einer Ausgangswelle, die auch als Getriebeeingangswelle bezeichnet werden kann. Ein Rotor der ersten elektrischen Maschine ist drehfest mit der ersten Welle verbunden ist und ein Rotor der zweiten elektrischen Maschine ist drehfest mit der Ausgangswelle verbunden.

Weiterhin umfasst die Antriebseinheit eine Trennkupplung, mit der der Rotor der ersten elektrischen Maschine und damit eine an die erste Welle angeschlossene Verbrennungskraftmaschine zur Drehmomentübertragung mit der Ausgangswelle verbindbar ist.

Zudem umfasst die Antriebseinheit weiterhin ein Anschlusselement, welches Bestandteil eines Abtriebselements der Verbrennungskraftmaschine ist. Dieses Anschlusselement dient zum drehfesten Anschluss einer Verbrennungskraftmaschine, wobei zwischen dem Anschlusselement und der ersten Welle, die mit dem Rotor der ersten elektrischen Maschine drehfest verbunden ist, eine erste Übersetzungsstufe angeordnet ist mit einer Übersetzung i <1 zwecks Übersetzung der von der Verbrennungskraftmaschine realisierten Drehzahl auf die Wellen ins Schnelle. Zudem umfasst die Antriebseinheit eine elektromechanische Parksperreinrichtung, die derart angeordnet und eingerichtet ist, dass mit ihr die Drehbewegung des Abtriebs der ersten Übersetzungsstufe blockierbar ist.

Es ist dabei insbesondere vorgesehen, dass die beiden elektrischen Maschinen in Reihe angeordnet sind. In einer bevorzugten Ausgestaltung ist vorgesehen, dass die Rotoren der beiden elektrischen Maschinen bzw. deren Rotationsachsen koaxial angeordnet sind.

Die Trennkupplung ist eine schaltbare Kupplung, die von einem offenen Zustand in einen geschlossenen Zustand und umgekehrt geschaltet werden kann. Insbesondere ist vorgesehen, dass die Trennkupplung im normalen Zustand geschlossen ist, so dass die erste Welle und die Ausgangswelle drehfest miteinander verbunden sind.

Die Antriebseinheit kann dabei derart ausgestaltet sein, dass die mit dem Rotor der ersten elektrischen Maschine fest verbundene erste Welle radial innerhalb der mit dem Rotor der zweiten elektrischen Maschine fest verbundenen Ausgangswelle angeordnet ist.

Die erste Welle kann dabei geteilt ausgeführt sein, nämlich in Form einer zentral verlaufenden Hohlwelle, auf der bereichsweise eine drehfest verbundene Nabe angeordnet ist, die wiederum drehfest mit dem Rotor der ersten elektrischen Maschine verbunden ist.

Die radiale Innenseite der Trennkupplung kann dabei drehfest mit der Nabe an der ersten elektrischen Maschine verbunden sein, und die radiale Außenseite der Trennkupplung kann mit der Ausgangswelle, die drehfest mit dem Rotor der zweiten elektrischen Maschine verbunden ist, verbunden sein.

Der Abtrieb der ersten Übersetzungsstufe ist entsprechend durch die erste Welle bzw. die einzelnen, die erste Welle ausbildenden bzw. mit der ersten Welle drehfest gekoppelten Elemente wie z.B. Hohlwelle, Nabe, Rotor der ersten elektrischen Maschine, sowie die über die Trennkupplung mit der ersten Welle gekoppelte Ausgangswelle definiert. Erfindungsgemäß ist also vorgesehen, dass bei Betätigung der Parksperreinrichtung diese auf wenigstens eines dieser Elemente blockierend wirkt.

Auf Grund dessen, dass der Abtrieb der ersten Übersetzungsstufe mit einer höheren Drehzahl als die angeschlossene Verbrennungskraftmaschine bzw. ein Anschlusselement zum drehfesten Anschluss einer Verbrennungskraftmaschine dreht, liegt am Abtrieb der ersten Übersetzungsstufe ein geringeres Drehmoment an als am Anschlusselement. Dies ermöglicht einen verschleißgeminderten Betrieb der Parksperreinrichtung, da diese geringere Kräfte aufzubringen bzw. zu überwinden hat, um eine Drehblockade an der ersten Welle zu bewirken.

Die Drehblockade kann dabei derart ausgeführt sein, dass bei Blockadewirkung noch sehr kleine Drehwinkelbeträge durch die Wellen ausführbar sind, z.B. bis zu 2°. Vorzugsweise umfasst das Anschlusselement ein innenverzahntes Zahnrad, wobei die erste Welle eine Außenverzahnung aufweist und die beiden Verzahnungen zwecks Übertragung der Drehbewegung vom Anschlusselement auf die erste Welle miteinander kämmen. Die Außenverzahnung kann dabei ein Bestandteil der ersten Welle, insbesondere deren Hohlwelle, sein, oder aber durch ein weiteres Maschinenelement ausgebildet sein, welches drehfest mit der ersten Welle verbunden ist.

Erfindungsgemäß umfasst die Ausgangswelle weiterhin eine Sperrverzahnung zum formschlüssigen Eingriff eines Sperrelements der elektromechanischen Parksperreinrichtung. Entsprechend ist vorgesehen, dass die elektromechanische Parksperreinrichtung auf die Ausgangswelle wirkt, welche bei geschlossener Trennkupplung somit auch eine Blockade der Drehbewegung der ersten Welle bewirkt.

Das Anschlusselement kann dabei ein Bestandteil eines Abtriebselements einer anzuschließenden Verbrennungskraftmaschine sein, welche insbesondere eine Dämpfereinheit umfasst.

Das Abtriebselement kann weiterhin eine weitere Kupplung zum Öffnen und Schließen des Drehmoment-Übertragungspfades zwischen der Verbrennungskraftmaschine und der Antriebseinheit oder auch eine Kombination aus einer Dämpfereinheit und einer Kupplung aufweisen.

Erfindungsgemäß ist vorgesehen, dass die Antriebseinheit eine zweite Übersetzungsstufe aufweist, welche durch eine Verzahnung, insbesondere eine Außenverzahnung, der Ausgangswelle und vorzugsweise ein erstes, mit der Verzahnung der Ausgangswelle kämmendes, Zahnrad ausgebildet ist.

Es wird dadurch eine Übersetzung i > 1 der Drehzahl der Ausgangswelle und demzufolge ins Langsame realisiert, so dass die elektromechanische Parksperreinrichtung in einem aus der ersten Übersetzungsstufe und der zweiten Übersetzungsstufe gebildeten Gesamt-Getriebe an der Stelle des Drehmoment-Übertragungspfades des Anliegens der maximalen Drehzahl und des minimalen Drehmoments eingreift.

Die Ausgangswelle kann dabei selbst die Verzahnung ausbilden, oder mit einer solchen drehfest verbunden sein.

Entsprechend ist als Bestandteil der Antriebseinheit ein Getriebe ausgebildet, welches mit der auch als Getriebeeingangswelle bezeichneten Ausgangswelle der Antriebseinheit in Wirkverbindung steht, sodass ein von der Ausgangswelle zur Verfügung gestelltes Drehmoment bzw. die von der Ausgangswelle realisierte Drehbewegung über das Getriebe untersetzt an eine weitere Getriebeeinheit eines Kraftfahrzeugs geleitet werden kann, oder auch direkt auf Antriebsräder eines Kraftfahrzeuges geleitet werden kann.

Dieses Getriebe kann im Abtriebsbereich ein Differenzial-Getriebe umfassen oder als ein solches ausgestaltet sein.

Das erste Zahnrad kann dabei drehfest mit einer Vorlegewelle des Getriebes gekoppelt sein, deren Außenverzahnung wiederum mit einem Eingangs-Zahnrad eines Differenzial-Getriebes kämmt, wodurch eine dritte Übersetzungsstufe realisiert wird.

Geometrisch sind die einzelnen Aggregate der Antriebseinheit erfindungsgemäß derart angeordnet, dass der Eingriff der elektromechanischen Parksperreinrichtung auf den Abtrieb der ersten Übersetzungsstufe in axialer Richtung zwischen der Position der Trennkupplung und der ersten Übersetzungsstufe realisiert ist.

Erfindungsgemäß befindet sich die Sperrverzahnung der Ausgangswelle in axialer Richtung unmittelbar neben der Verzahnung zur Ausbildung der zweiten Übersetzungsstufe. An der der Verzahnung zur Ausbildung der zweiten Übersetzungsstufe axial gegenüberliegenden Seite ist auf der ersten Welle die Außenverzahnung zur Ausbildung der ersten Übersetzungsstufe angeordnet.

Die Antriebseinheit kann ergänzend ein Hauptsteuergerät zur Steuerung der elektromechanischen Parksperreinrichtung aufweisen. Dieses Hauptsteuergerät weist vorzugsweise eine Schnittstelle zum Anschluss an eine zentrale Steuereinheit eines mit der Antriebseinheit auszustattenden Kraftfahrzeugs auf.

Ein weiterer Aspekt der vorliegenden Erfindung ist eine Antriebsanordnung mit einer erfindungsgemäßen Antriebseinheit sowie mit einer Verbrennungskraftmaschine, die über das Anschlusselement des Abtriebselements der Verbrennungskraftmaschine drehfest mit dem Rotor der ersten elektrischen Maschine gekoppelt oder koppelbar ist. In weiterer Ausgestaltung umfasst die Antriebsanordnung auch wenigstens eine Radantriebswelle, die über das Getriebe mit der Ausgangswelle der Antriebseinheit verbunden ist, sodass eine von der Ausgangswelle realisierte Drehbewegung durch das Getriebe auf die Radantriebswelle übertragen werden kann.

Zur Lösung der Aufgabe wird weiterhin ein Hybrid-Kraftfahrzeug zur Verfügung gestellt, welches eine erfindungsgemäße Antriebsanordnung sowie ein zentrale Steuereinheit aufweist, die über eine Schnittstelle mit dem Hauptsteuergerät der Antriebseinheit steuerungstechnisch verbunden ist. Derart lässt sich die elektromechanische Parksperreinrichtung über das Hauptsteuergerät der Antriebseinheit durch die zentrale Steuereinheit steuern.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
- Figur 1:: eine erfindungsgemäße Antriebseinheit in Schnittansicht, und
- Figur 2:: eine elektromechanische Parksperreinrichtung in perspektivischer Darstellung.

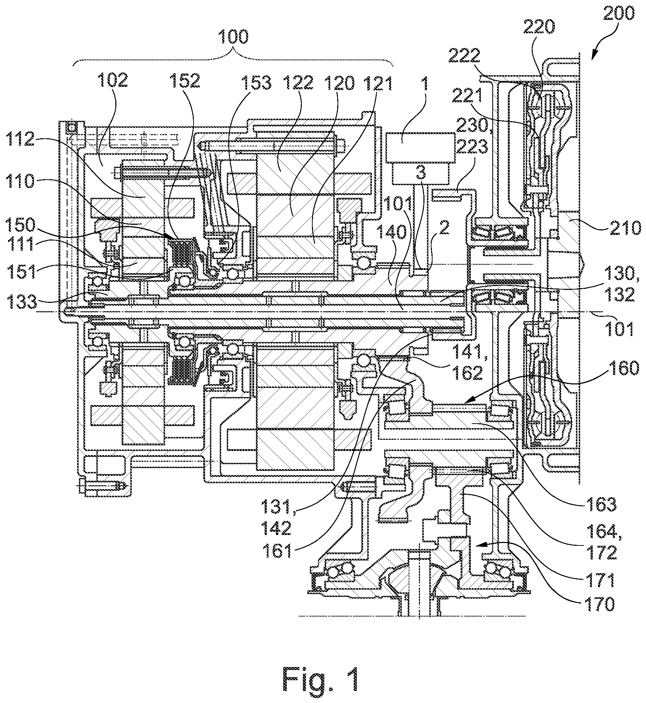

In Figur 1 ist eine erfindungsgemäße Antriebseinheit 100 für einen Antriebsstrang eines elektrisch antreibbaren Kraftfahrzeugs, insbesondere eines Hybridkraftfahrzeuges, dargestellt, die eine erste elektrischen Maschine 110 sowie eine zweite elektrische Maschine 120 aufweist, die beide auf einer gemeinsamen Rotationsachse 101 angeordnet sind. Der Rotor 111 der ersten elektrischen Maschine 110 ist dabei koaxial zur Rotationsachse 101 sowie auch zum Rotor 121 der zweiten elektrischen Maschine 120 angeordnet.

Der Stator 112 der ersten elektrischen Maschine 110 sowie auch der Stator 122 der zweiten elektrischen Maschine 120 ist von einem Gehäuse 102 der Antriebseinheit 100 aufgenommen. Der Rotor 111 der ersten elektrischen Maschine ist drehfest mit einer ersten Welle 130 verbunden. Der Rotor 121 der zweiten elektrischen Maschine 120 ist drehfest mit einer Ausgangswelle 140 verbunden, die auch als Getriebeeingangswelle bezeichnet werden kann.

Weiterhin umfasst die Antriebseinheit 100 eine Trennkupplung 150, mit der die erste elektrische Maschine 110 und damit eine an der mit dem Rotor 111 der ersten elektrischen Maschine 110 drehfest verbundenen erste Welle 130 angeschlossene Verbrennungskraftmaschine zur Drehmomentübertragung mit der Ausgangswelle 140 verbindbar oder verbunden ist.

In der hier dargestellten Ausführungsform ist die erste Welle 130 zweiteilig ausgeführt, nämlich aus einer zentral verlaufenden Hohlwelle 132 sowie einer auf dieser Hohlwelle 132 positionierten und mit dieser drehfest verbundenen Nabe 133, wobei die Nabe 133 wiederum fest mit dem Rotor 111 der ersten elektrischen Maschine 110 verbunden ist.

Die Nabe 133 bildet die radiale Innenseite 151 der Trennkupplung 150 aus, bzw. ist mit dieser Eingangsseite der Trennkupplung 150 fest verbunden.

Die radiale Außenseite 152 der Trennkupplung 150, die die Ausgangsseite der Trennkupplung 150 realisiert, ist drehfest mit der Ausgangswelle 140 verbunden.

Die Trennkupplung 150 ist eine schaltbare Kupplung, die von einem offenen Zustand in einen geschlossenen Zustand und umgekehrt geschaltet werden kann. Zu diesem Zweck ist der Trennkupplung 150 ein Betätigungssystem 153 zugeordnet.

Derart kann bei Schließung der Trennkupplung 150 ein Drehmoment von der ersten Welle 130 auf die Ausgangswelle 140 oder auch umgekehrt übertragen werden.

In der hier dargestellten Ausführungsform ist somit vorgesehen, dass die beiden elektrischen Maschinen 110,120 in Reihe angeordnet sind, wobei die Rotoren 111,121 der beiden elektrischen Maschinen 110,120 bzw. deren Rotationsachsen koaxial angeordnet sind. Dabei verläuft die erste Welle 130 bzw. ihre zentral verlaufende Hohlwelle 132 radial innerhalb der Ausgangswelle 140, wodurch insgesamt das benötigte Bauvolumen der Antriebseinheit 100 gering gestaltet werden kann.

Des Weiteren umfasst die hier dargestellte Antriebseinheit 100 ein Getriebe 160, welches mit der auch als Getriebeeingangswelle bezeichneten Ausgangswelle 140 der Antriebseinheit 100 in Wirkverbindung steht, so dass ein von der Ausgangswelle 140 zur Verfügung gestelltes Drehmoment bzw. die von der Ausgangswelle 140 realisierte Drehbewegung über das Getriebe 160 über- oder untersetzt an eine weitere Getriebeeinheit eines Kraftfahrzeugs geleitet werden kann, oder auch direkt auf Antriebsräder eines Kraftfahrzeuges geleitet werden kann.

Dieses Getriebe 160 umfasst in der hier dargestellten Ausführungsform ein Differenzial-Getriebe 170. Des Weiteren umfasst das Getriebe 160 ein erstes Zahnrad 161, was mit einer Außenverzahnung 141 an der Ausgangswelle 140 kämmt. Durch das erste Zahnrad 161 wird somit eine zweite Übersetzungsstufe 162 in der Antriebseinheit 100 realisiert. Dieses erste Zahnrad 161 ist dabei drehfest mit einer Vorlegewelle 163 des Getriebes 160 gekoppelt, deren Außenverzahnung 164 wiederum mit einem Eingangs-Zahnrad 171 des Differenzial-Getriebes 170 kämmt, wodurch eine dritte Übersetzungsstufe 172 realisiert wird.

Die Antriebseinheit 100 ist dabei Bestandteil einer ebenfalls dargestellten Ausführungsform einer erfindungsgemäßen Antriebsanordnung 200.

Diese Antriebsanordnung 200 weist zusätzlich eine hier nicht dargestellte Verbrennungskraftmaschine auf, die im an den gezeigten Anschluss 210 angeschlossen Zustand, über die erste Welle 130 drehfest mit dem Rotor 111 der ersten elektrischen Maschine 110 gekoppelt oder - bei Zwischenschaltung einer weiteren Kupplung - koppelbar ist.

Die dargestellte Antriebsanordnung 200 ist derart ausgestaltet, dass zwischen dem Anschluss 210 für eine hier nicht dargestellte Verbrennungskraftmaschine und der ersten Welle 130, die mit dem Rotor 111 der ersten elektrischen Maschine 110 drehfest verbunden ist, eine erste Übersetzungsstufe 142 ausgebildet ist zwecks Übersetzung der Drehzahl der von der Verbrennungskraftmaschine bzw. von ihrem Anschluss 210 realisierten Drehbewegung auf die erste Welle 130.

Zu diesem Zweck ist ein Abtriebselement 220 der Verbrennungskraftmaschine vorgesehen, welches eine Dämpfereinheit 221 aufweisen kann oder auch eine Kupplung 222 zum Öffnen und Schließen des Drehmoment-Übertragungspfades zwischen der Verbrennungskraftmaschine und der Antriebseinheit 100, oder auch eine gezeigte Kombination aus einer Dämpfereinheit 221 und einer Kupplung 222.

Weiterhin umfasst das Abtriebselement 220 als einen Bestandteil ein innenverzahntes Zahnrad 223, welches mit einer Außenverzahnung 131 der ersten Welle 130 kämmt und somit eine erste Übersetzungsstufe 142 realisiert.

Es ist ersichtlich, dass in dem hier dargestellten Ausführungsbeispiel eine Drehachse des Abtriebselements 220 lateral versetzt ist zur Rotationsachse 101 der Antriebseinheit 100.

Derart kann eine von der hier nicht dargestellten Verbrennungskraftmaschine erzeugte Drehbewegung über das Abtriebselement 220 und die erste Übersetzungsstufe 142 auf die erste Welle 130 geleitet werden, sodass der darauf befindliche Rotor 111 der ersten elektrischen Maschine 110 in Drehbewegung versetzt werden kann, um als Generator betrieben zu werden.

Bei Schließung der Trennkupplung 150 kann die anliegende Drehbewegung von der ersten Welle 130, gegebenenfalls verstärkt von einem elektromotorischen Antrieb durch die erste elektrische Maschine 110, auf die Ausgangswelle 140 übertragen werden. Aufgrund der drehfesten Verbindung des Rotors 122 der zweiten elektrischen Maschine 120 mit der Ausgangswelle 140 kann ebenfalls ein von der zweiten elektrischen Maschine 120 zur Verfügung gestelltes Drehmoment zusätzlich auf die Ausgangswelle 140 aufgebracht werden.

Alternativ kann bei Öffnung der Trennkupplung 150 auch nur die zweite elektrische Maschine 120 alleine betrieben werden, um die Ausgangswelle 140 zu drehen.

Die Drehbewegung der Ausgangswelle 140 wird über ihre Außenverzahnung 141 auf das erste Zahnrad 161 des angeschlossenen Getriebes 160 geleitet, wobei die zweite Übersetzungsstufe 162 realisiert wird.

Vom ersten Zahnrad 161 wird das Drehmoment bzw. die Drehbewegung auf die Vorlegewelle 163 geleitet, von der es über das Eingangs-Zahnrad 171 des Differenzial-Getriebes 170 diesem zugeleitet wird.

Vom Differenzial-Getriebe 170 wird das Drehmoment hier nicht dargestellten Radantriebs-Wellen zugeleitet, oder auch bei Bedarf einem weiteren Getriebe zur Über- bzw. Untersetzung des Drehmoments bzw. der Drehzahl.

Weiterhin ist in Figur 1 ersichtlich, dass die dargestellte Antriebseinheit 200 eine elektromechanische Parksperrreinrichtung 1 umfasst. Diese greift mit einem Sperrelement 3 in eine Sperrverzahnung 2 der Ausgangswelle 140 ein.

Mit der dargestellten Antriebsanordnung 200 lassen sich unterschiedlichste Fahrzustände realisieren, wie zum Beispiel der Betrieb der Verbrennungskraftmaschine alleine zum Antrieb eines Kraftfahrzeugs, oder auch unter Hinzuschaltung der zweiten elektrischen Maschine und/oder der ersten elektrischen Maschine, sowie ein gleichzeitiger Generatorbetrieb der ersten elektrischen Maschine beim Betrieb der Verbrennungskraftmaschine und/oder der zweiten elektrischen Maschine, sowie ein alleiniger Betrieb der zweiten elektrischen Maschine, oder auch ein Rekuperationsbetrieb der ersten elektrischen Maschine und/oder der zweiten elektrischen Maschine.

Durch die erfindungsgemäß vorgesehene elektromechanische Parksperreinrichtung 1 lässt sich die Drehbewegung der Ausgangswelle 140 blockieren und somit ein Radantrieb eines mit der erfindungsgemäßen Antriebseinheit ausgestatteten Fahrzeugs sperren.

Das Anschlusselement 230 des Abtriebselements 220, welches zum Anschluss einer hier nicht dargestellten Verbrennungskraftmaschine dient, ist ersichtlich mit einem größeren Durchmesser ausgestaltet als die Außenverzahnung 131 der ersten Welle 130, sodass durch die dadurch realisierte erste Übersetzungsstufe 142 eine Übersetzung der Drehzahl des Abtriebselements 220 ins Schnelle realisiert wird. In entsprechender Weise ist das an der ersten Welle 130 anliegende Drehmoment relativ gering, sodass die hier eingreifende elektromechanische Parksperreinrichtung 1 relativ geringe Drehmomente zu überwinden bzw. zu halten hat.

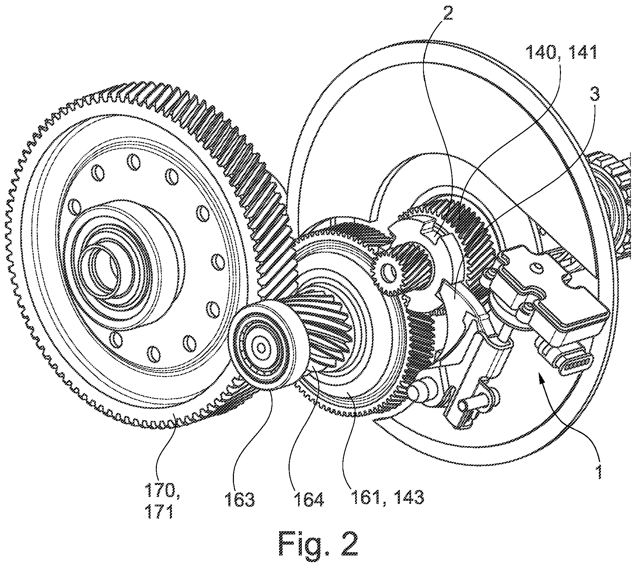

In Figur 2 ist eine elektromechanische Parksperreinrichtung 1 in perspektivischer Darstellung gezeigt. Im Detail ist hier als Element der elektromechanischen Parksperreinrichtung 1 ein Sperrelement 3 gezeigt, welches derartig betätigt werden kann, dass es, wie in Figur 2 ersichtlich, in eine Sperrverzahnung 2 auf bzw. in der Ausgangswelle 140 eingreifen kann. Damit wird eine Rotation der Ausgangswelle 140 blockiert. In entsprechender Weise ist auch eine Drehbewegung des Abtriebs 143 der ersten Übersetzungsstufe 142 blockiert.

Als Folge davon ist auch eine Drehbewegung des ersten Zahnrades 161 blockiert, welches sich auf einer Vorliegewelle 163 befindet. Ebenso ist die Drehbewegung der diesbezüglich rotationsfest angeordneten Außenverzahnung 164 blockiert.

Durch das Eingreifen des Eingangs-Zahnrades 171 des Differenzial-Getriebes 170 in die Außenverzahnung 164 der Vorlegewelle 163 ist entsprechend auch das Differenzial-Getriebe 170 blockiert.

Derart kann durch die elektromechanische Parksperreinrichtung 1 eine Drehbewegung der an das Differenzial-Getriebe 170 angeschlossenen Räder eines Kraftfahrzeuges blockiert werden und eine Parksperre realisiert werden.

Mit der hier vorgeschlagenen Antriebseinheit sowie der damit ausgestatteten Antriebsanordnung und dem damit ausgerüsteten Hybrid-Kraftfahrzeug werden Einrichtungen zur Verfügung gestellt, die mit effizient genutztem Bauraum einen Betrieb mit hohem Wirkungsgrad gewährleisten.

### Bezugszeichenliste

- 1: elektromechanische Parksperreinrichtung
- 2: Sperrverzahnung (der Ausgangswelle)
- 3: Sperrelement (der Parksperreinrichtung)
- 100: Antriebseinheit
- 101: Rotationsachse
- 102: Gehäuse
- 110: erste elektrische Maschine
- 111: Rotor der ersten elektrischen Maschine
- 112: Stator der ersten elektrischen Maschine
- 120: zweite elektrische Maschine
- 121: Rotor der zweiten elektrischen Maschine
- 122: Stator der zweiten elektrischen Maschine
- 130: erste Welle
- 131: Außenverzahnung der ersten Welle
- 132: zentral verlaufende Hohlwelle
- 133: Nabe
- 140: Ausgangswelle
- 141: Außenverzahnung der Ausgangswelle
- 142: erste Übersetzungsstufe
- 143: Abtrieb der ersten Übersetzungsstufe
- 150: Trennkupplung
- 151: radiale Innenseite der Trennkupplung
- 152: radiale Außenseite der Trennkupplung
- 153: Betätigungssystem
- 160: Getriebe
- 161: erstes Zahnrad
- 162: zweite Übersetzungsstufe
- 163: Vorlegewelle
- 164: Außenverzahnung der Vorlegewelle
- 170: Differenzial-Getriebe
- 171: Eingangs-Zahnrad
- 172: dritte Übersetzungsstufe
- 200: Antriebsanordnung
- 210: Anschluss für eine Verbrennungskraftmaschine
- 220: Abtriebselement
- 221: Dämpfereinheit
- 222: Kupplung
- 223: innenverzahntes Zahnrad
- 230: Anschlusselement

## Patentansprüche

1. Antriebseinheit (100) für einen Antriebsstrang eines elektrisch antreibbaren Kraftfahrzeugs, insbesondere eines Hybridkraftfahrzeuges, mit einer ersten elektrischen Maschine (110) sowie einer zweiten elektrischen Maschine (120) und einer ersten Welle (130) sowie einer Ausgangswelle (140), wobei ein Rotor (111) der ersten elektrischen Maschine (110) drehfest mit der ersten Welle (130) verbunden ist und ein Rotor (121) der zweiten elektrischen Maschine (120) drehfest mit der Ausgangswelle (140) verbunden ist und wobei die Antriebseinheit (100) weiterhin eine Trennkupplung (150) aufweist, mit der der Rotor (111) der ersten elektrischen Maschine (110) zur Drehmomentübertragung mit der Ausgangswelle (140) verbindbar ist, wobei die Antriebseinheit (100) weiterhin ein Anschlusselement (230) zum drehfesten Anschluss einer Verbrennungskraftmaschine aufweist und zwischen dem Anschlusselement (230) und der ersten Welle (130, die mit dem Rotor (111) der ersten elektrischen Maschine (110) drehfest verbunden ist, eine erste Übersetzungsstufe (142) angeordnet ist mit einer Übersetzung i <1, wobei die Antriebseinheit (100) eine elektromechanische Parksperreinrichtung (1) aufweist, die derart angeordnet und eingerichtet ist, dass mit ihr die Drehbewegung des Abtriebs der ersten Übersetzungsstufe (142) blockierbar ist, wobei die Ausgangswelle (140) eine Sperrverzahnung (2) aufweist zum formschlüssigen Eingriff eines Sperrelements der elektromechanischen Parksperreinrichtung (1), wobei der Eingriff der elektromechanischen Parksperreinrichtung (1) auf den Abtrieb der ersten Übersetzungsstufe (142) in axialer Richtung zwischen der Position der Trennkupplung (150) und der ersten Übersetzungsstufe (142) realisiert ist und sich die Sperrverzahnung (2) der Ausgangswelle (140) in axialer Richtung unmittelbar neben einer Verzahnung (141) zur Ausbildung einer zweiten Übersetzungsstufe (162) befindet.

2. Antriebseinheit nach Anspruch 1, wobei das Anschlusselement (230) ein innenverzahntes Zahnrad (223) umfasst, und die erste Welle (130) eine Außenverzahnung (131) aufweist, wobei die beiden Verzahnungen (223, 131) zwecks Übertragung der Drehbewegung vom Anschlusselement (230) auf die erste Welle (130) miteinander kämmen.

3. Antriebseinheit nach einem der vorhergehenden Ansprüche, wobei das Anschlusselement (230) ein Bestandteil eines Abtriebselements (220) einer anzuschließenden Verbrennungskraftmaschine ist, welche insbesondere eine Dämpfereinheit (221) umfasst.

4. Antriebseinheit nach einem der vorhergehenden Ansprüche, wobei die zweite Übersetzungsstufe (162) durch die Verzahnung (141), insbesondere eine Außenverzahnung (141), der Ausgangswelle (140) und ein erstes, mit der Verzahnung (141) der Ausgangswelle (140) kämmendes, Zahnrad (161) ausgebildet ist, und eine Übersetzung i > 1 der Drehzahl der Ausgangswelle (140) realisiert, so dass die elektromechanische Parksperreinrichtung 1 in einem aus der ersten Übersetzungsstufe (142) und der zweiten Übersetzungsstufe (162) gebildeten Gesamt-Getriebe an der Stelle des Drehmoment-Übertragungspfades des Anliegens der maximalen Drehzahl und des minimalen Drehmoments eingreift.

5. Antriebseinheit nach einem der vorhergehenden Ansprüche, wobei die Antriebseinheit (100) ein Hauptsteuergerät zur Steuerung der elektromechanischen Parksperreinrichtung (1) aufweist.

6. Antriebsanordnung mit einer Antriebseinheit gemäß einem der Ansprüche 1 bis 5 sowie mit einer Verbrennungskraftmaschine, die über das Anschlusselement (230) des Abtriebselements (220) der Verbrennungskraftmaschine drehfest mit dem Rotor (111) der ersten elektrischen Maschine 110 gekoppelt oder koppelbar ist.

7. Hybrid-Kraftfahrzeug, umfassend eine Antriebsanordnung gemäß Anspruch 6 sowie eine zentrale Steuereinheit, die über eine Schnittstelle mit dem Hauptsteuergerät der Antriebseinheit steuerungstechnisch verbunden ist.

## Claims

1. A drive unit (100) for a drive train of an electrically drivable motor vehicle, in particular a hybrid motor vehicle, having a first electric machine (110) and a second electric machine (120) and a first shaft (130) and an output shaft (140), wherein a rotor (111) of the first electric machine (110) is rotationally fixed to the first shaft (130) and a rotor (121) of the second electric machine (120) is connected in a rotationally fixed manner to the output shaft (140) and wherein the drive unit (100) further has a separating clutch (150) with which the rotor (111) of the first electric machine (110) can be connected to the output shaft (140) for torque transmission, wherein the drive unit (100) further has a connection element (230) for rotationally fixed connection to an internal combustion engine and a first transmission stage (142) is arranged between the connection element (230) and the first shaft (130), which is connected in a rotationally fixed manner to the rotor (111) of the first electric machine (110), with a transmission ratio i <1, wherein the drive unit (100) has an electromechanical parking lock device (1) which is arranged and configured in such a way that the rotary movement of the output of the first transmission stage (142) can thereby be locked, wherein the output shaft (140) has a locking toothing (2) for positive engagement of a locking element of the electromechanical parking lock device (1), wherein the engagement of the electromechanical parking lock device (1) on the output of the first transmission stage (142) is implemented in the axial direction between the position of the separating clutch (150) and the first transmission stage (142) and the locking toothing (2) of the output shaft (140) is located in the axial direction directly next to a toothing (141) for forming a second transmission stage (162).

2. The drive unit according to claim 1, wherein the connection element (230) comprises an internally toothed gear (223) and the first shaft (130) has an external toothing (131), wherein the two toothings (223, 131) mesh with each other to transmit rotary motion from the connection element (230) to the first shaft (130).

3. The drive unit according to any one of the preceding claims, wherein the connection element (230) is a component of a drive element (220) of an internal combustion engine to be connected, which in particular comprises a damping unit (221).

4. The drive unit according to any one of the preceding claims, wherein the second transmission stage (162) is formed by the toothing (141), in particular an external toothing (141), of the output shaft (140) and a first gear wheel (161) meshing with the toothing (141) of the output shaft (140), and realises a transmission ratio i > 1 of the speed of the output shaft (140), so that the electromechanical parking lock device 1 engages in an overall transmission formed by the first transmission stage (142) and the second transmission stage (162) at the point of the torque transmission path at which the maximum speed and the minimum torque is applied.

5. The drive unit according to any one of the preceding claims, wherein the drive unit (100) has a main control device for controlling the electromechanical parking lock device (1).

6. A drive assembly having a drive unit according to any one of claims 1 to 5 and having an internal combustion engine which is coupled or can be coupled in a rotationally fixed manner to the rotor (111) of the first electric machine 110 via the connection element (230) of the output element (220) of the internal combustion engine.

7. A hybrid motor vehicle, comprising a drive assembly according to claim 6 and a central control unit which is connected via an interface to the main control device of the drive unit.

## Revendications

1. Unité d'entraînement (100) pour une chaîne cinématique d'un véhicule automobile à entraînement électrique, en particulier d'un véhicule automobile hybride, comprenant une première machine électrique (110) ainsi qu'une deuxième machine électrique (120) et un premier arbre (130) ainsi qu'un arbre de sortie (140), un rotor (111) de la première machine électrique (110) étant relié solidairement en rotation au premier arbre (130) et un rotor (121) de la deuxième machine électrique (120) étant relié solidairement en rotation à l'arbre de sortie (140) et l'unité d'entraînement (100) présentant en outre un embrayage de séparation (150), avec lequel le rotor (111) de la première machine électrique (110) peut être relié à l'arbre de sortie (140) pour la transmission du couple, l'unité d'entraînement (100) présentant en outre un élément de raccordement (230) pour le raccordement solidaire en rotation d'un moteur à combustion interne et, entre l'élément de raccordement (230) et le premier arbre (130, qui est relié solidairement en rotation au rotor (111) de la première machine électrique (110), un premier étage de démultiplication (142) est disposé avec une démultiplication i <1, l'unité d'entraînement (100) présentant un dispositif électromécanique de blocage de stationnement (1) qui est disposé et aménagé de telle sorte qu'il permet de bloquer le mouvement de rotation de la sortie du premier étage de démultiplication (142), l'arbre de sortie (140) présentant une denture de blocage (2) pour l'engrènement par complémentarité de forme d'un élément de blocage du dispositif électromécanique de blocage de stationnement (1), l'engagement du dispositif électromécanique de blocage de stationnement (1) sur la sortie du premier étage de démultiplication (142) étant réalisé dans la direction axiale entre la position de l'embrayage de séparation (150) et le premier étage de démultiplication (142) et la denture de blocage (2) de l'arbre de sortie (140) se trouvant dans la direction axiale directement à côté d'une denture (141) pour former un deuxième étage de démultiplication (162).

2. Unité d'entraînement selon la revendication 1, dans laquelle l'élément de raccordement (230) comprend une roue dentée à denture intérieure (223) et le premier arbre (130) présente une denture extérieure (131), les deux dentures (223, 131) s'engrenant l'une dans l'autre en vue de la transmission du mouvement de rotation de l'élément de raccordement (230) au premier arbre (130).

3. Unité d'entraînement selon l'une quelconque des revendications précédentes, dans laquelle l'élément de raccordement (230) est un composant d'un élément de sortie (220) d'un moteur à combustion interne à raccorder, qui comprend notamment une unité d'amortissement (221).

4. Unité d'entraînement selon l'une quelconque des revendications précédentes, le deuxième étage de démultiplication (162) étant réalisé par la denture (141), notamment une denture extérieure (141), de l'arbre de sortie (140) et une première roue dentée (161) engrenant avec la denture (141) de l'arbre de sortie (140) et réalise un rapport de démultiplication i > 1 de la vitesse de rotation de l'arbre de sortie (140), de sorte que le dispositif électromécanique de blocage de stationnement 1 s'engrène dans une boîte de vitesse globale formée par le premier étage de démultiplication (142) et le deuxième étage de démultiplication (162) à l'endroit du chemin de transmission du couple de l'application de la vitesse de rotation maximale et du couple minimal.

5. Unité d'entraînement selon l'une quelconque des revendications précédentes, dans laquelle l'unité d'entraînement (100) comporte une unité de commande principale pour commander le dispositif électromécanique de blocage de stationnement (1).

6. Système d'entraînement comprenant une unité d'entraînement selon l'une quelconque des revendications 1 à 5 ainsi qu'un moteur à combustion interne qui est ou peut être couplé solidaire en rotation avec le rotor (111) de la première machine électrique 110 par l'intermédiaire de l'élément de raccordement (230) de l'élément de sortie (220) du moteur à combustion interne.

7. Véhicule automobile hybride, comprenant un système d'entraînement selon la revendication 6 ainsi qu'une unité de commande centrale qui est reliée selon la technique de commande par une interface à l'unité de commande principale de l'unité d'entraînement.
